# EUROPÄISCHE PATENTSCHRIFT

(11) **EP 3 106 069 B1**
(45) Veröffentlichungstag und Bekanntmachung des Hinweises auf die Patenterteilung: **21.03.2018**
(21) Anmeldenummer: 16001348.8
(22) Anmeldetag: 15.06.2016
(51) Int. Cl.: A47J 42/04, A47J 42/08

(54) **GEWÜRZMÜHLE**
SPICE MILL
MOULIN À ÉPICES

(30) Priorität: 18.06.2015 DE 102015109726
(43) Veröffentlichungstag der Anmeldung: 21.12.2016
(73) Patentinhaber: Merschbrock Vermietung & Verpachtung GmbH & Co. KG, 33415 Verl (DE)
(72) Erfinder: Merschbrock, Uwe, 33415 Verl (DE)
(74) Vertreter: Rolf, Gudrun

(56) Entgegenhaltungen:
- DE-A1- 2 548 812
- US-A1- 2012 006 922

## Beschreibung

Die Erfindung betrifft eine Gewürzmühle aus einem Gewürzbehälter für das Mahlgut, einem Gehäuseunterteil mit einem verdrehfesten Mahlwerk-Außenteil eines Kegelmahlwerks, einem Gehäuseoberteil mit einem verdrehfesten Mahlwerk-Innenteil und gegeneinander verdrehbarem Gehäuseoberteil und Gehäuseunterteil sowie aus einem auf das Gehäuseoberteil aufsetzbaren Armomadeckel.

Eine solche Gewürzmühle ist aus der DE 20 2012 100 882 U1 bekannt, deren Mahlwerk allerdings nicht verstellbar ist, sodass hier keine Variationen in der Körnung des Mahlgutes möglich sind.

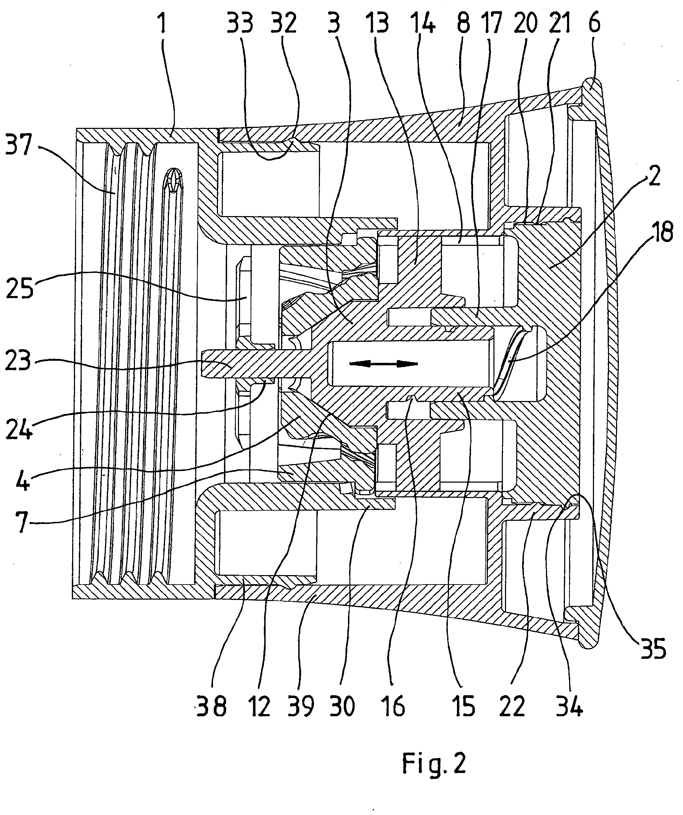

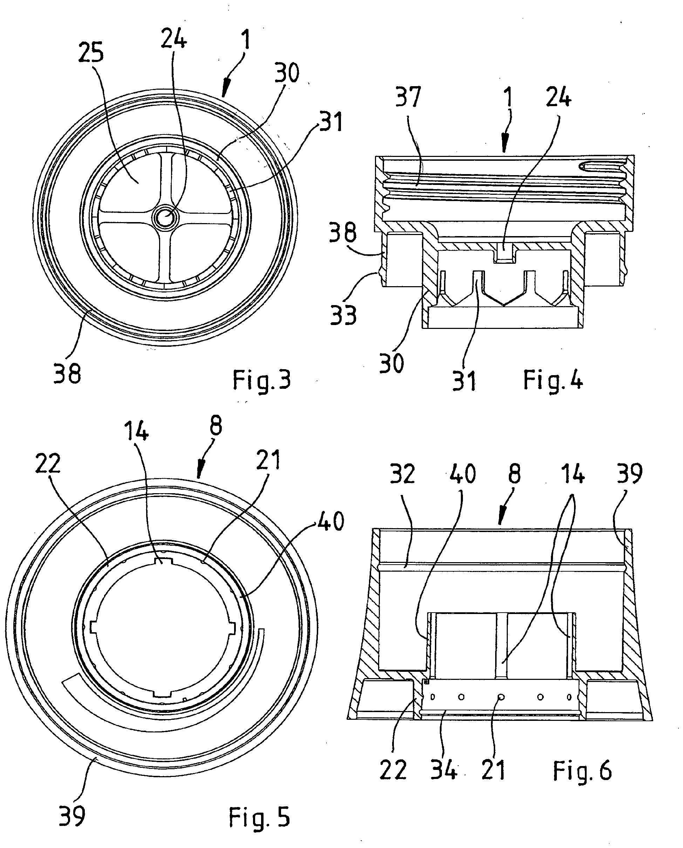

Andere bekannte Gewürzmühlen mit verstellbaren Mahlwerken, DE 10 2013 017 403 A1, weisen in der Regel sich durch die gesamte Länge einer Gewürzmühle erstreckende Antriebsachsen für das Mahlwerk auf, welches zusätzlich aus Metallbauteilen bestehen kann, wie auch andere Bauteile der Mühle, etwa metallische Federn oder Teile aus Aludruckguss oder Messing, von denen sich Späne oder daran anhaftende Öle oder Fette ungünstigerweise im Mahlgut wiederfinden lassen. Nachteilig ist weiterhin, dass diese bekannten Gewürzmühlen mittels zusätzlicher Verbindungsmittel, wie Halte- oder Klemmschrauben zusammengesetzt sind, was deren Produktion wesentlich nachteilig verteuert. Die US 2012/006922 A1 offenbart eine Gewürzmühle aus einem Gewürzbehälter 2 für das Mahlgut, einem Gehäuseunterteil mit einem verdrehfesten Mahlwerk-Außenteil 3 eines Kegelmahlwerks, einem Gehäuseoberteil mit einem verdrehfesten Mahlwerk-Innenteil 4 und gegeneinander verdrehbarem Gehäuseober- und -unterteil, sowie aus einem Aromadeckel 30. Alle Bauteile bestehen aus Kunststoff (siehe Paragraph 0062). Alle Bauteile sind werkzeugfrei und frei von zusätzlichen Verbindungsmitteln zusammenbaubar und dazu mit gegenseitigen Rasten und Rastnasen ausgestattet (siehe u.a. die Fig. 2 und 3). Eine aus der DT 25 28 812 A1 als Pfeffermühle bekannte Mahlvorrichtung besteht ebenfalls aus wenigen multifunktionalen Kunststoffteilen, ist allerdings nicht verstellbar.

Aufgabe der Erfindung ist es, eine in der Körnung verstellbare Gewürzmühle zur Verfügung zu stellen, die ohne gesundheitsbedenkliche oder Metallbestandteile auskommt, die weiterhin ohne die Verwendung von separaten mechanischen Verbindungsmitteln oder anderer metallischer Bauteile gefertigt werden kann.

Die Lösung dieser Aufgabe erfolgt durch eine Gewürzmühle mit den Merkmalen des Anspruchs 1. Ganz besonders vorteilhaft an dieser erfinderischen Gewürzmühle ist, dass der Zusammenbau nicht nur einfach von werkzeugfreier Hand durch leichtes Zusammenfügen der einzelnen Bauteile erfolgen kann, sondern insbesondere auch vollautomatisch stattfinden kann, da die einzelnen Bauteile nur entlang der Mittelsenkrechten durch das Bauteil zusammengesteckt und gegenseitig verriegelt werden müssen, wobei die Bauteile zum Teil so ausgeführt sind, dass sie sich automatisch in eine passende Winkelposition zu einem anderen Bauteil bewegen, ohne dass hierzu aktiv das entsprechende Montagewerkzeug gedreht werden müsste. Die Montage der Gewürzmühle ist deswegen trotz des vorgesehenen einstellbaren Mahlwerkes schnell, einfach und ohne die Verwendung von zusätzlichen Befestigungsmitteln wie Schrauben, Bolzen oder Klemmschrauben durchführbar, wobei die Höhenverstellung vorteilhafterweise durch zwei Kunststoffbauteile bewerkstelligt wird, die in einem der Gehäuseteile relativ zueinander beweglich ausgestaltet sind, wohingegen das Mahlwerk-Außenteil und das Mahlwerk-Innenteil in unterschiedlichen Gehäuseteilen angeordnet sind, was fertigungstechnisch wesentliche Vorteile mit sich bringt.

Erfindungsgemäß ist das Führungsteil mit sich speichenartig radial erstreckenden Flügeln ausgestattet, deren Enden sich in axiale Nuten im Gehäuseoberteil erstrecken, wobei diese Nuten länger ausgebildet sind, als die Flügel des Führungsteiles breit sind, sodass das Führungsteil entlang der Mittellängsachse der Gewürzmühle längsverschieblich darin gelagert sein kann. Der Freiraum zwischen den Flügeln dient der Passagemöglichkeit des gemahlenen Mahlgutes. Durch eine Mehrzahl solcher radialen Flügel wird des Weiteren die präzise zentrische Lagerung des Führungsteiles gewährleistet.

Weitere vorteilhafte Ausgestaltungen des Gegenstandes der Erfindung ergeben sich mit und in Kombination aus den nachfolgenden Unteransprüchen.

Das Mahlwerk-Innenteil beispielsweise besteht vorteilhafterweise aus einem Keramikbauteil

Das beidseitig koaxial der Mittellängsachse der Gewürzmühle aus dem Mahlwerk-Innenteil hervorstehende Führungsteil ist dabei vorteilhafter Weise so gestaltet, dass beide Enden entweder mittelbar oder unmittelbar in einem Gehäuseteil gelagert sind, entweder unmittelbar im Gehäuseunterteil oder mittelbar über ein Stellrad im Gehäuseoberteil, sodass trotz Verzicht auf eine durch die gesamte Gewürzmühle hindurchtretende Antriebsachse, wie im Stand der Technik, eine definierte radiale Lagerung des Führungsteils möglich ist und dadurch eine gleichbleibende Güte der eingestellten Körnung des Mahlgutes gewährleistet werden kann.

Vorteilhaft ist des Weiteren, dass das Mahlwerk-Innenteil dabei eine mehrflächige trichterförmige Innenkontur und das Führungsteil eine komplementäre, mehrflächige, pyramidenförmige Außenkontur aufweist und dass das Mahlwerk-Innenteil auf dem Führungsteil zentriert gelagert ist und die Innen- und Außenkonturen gegenseitige formschlüssige Drehmomentübertragungsflächen bilden, sodass das keramische Mahlwerk-Innenteil nur großflächig mit Funktionskräften, insbesondere Druckkräften beaufschlagt wird, wodurch seine Dauerhaltbarkeit gesteigert wird, ebenso wie die exakte Zentrierung auf dem Führungsteil weiterhin für eine hohe Qualität des Mahlergebnisses bürgt.

Die Flügel bei einer weiteren bevorzugten Ausführungsform der Erfindung sind unterschiedlich dick bzw. breit ausgeführt und das Führungsteil weist entsprechend ausgebildete Nuten auf, sodass das Führungsteil nur in einer einzigen vorbestimmten Position in das Gehäuseoberteil einsetzbar ausgebildet ist, was eine Fehlmontage der Gewürzmühle vollständig ausschließt.

Das Führungsteil der Gewürzmühle weist des Weiteren der dem Mahlwerk-Innenteil entgegengesetzten Seite eine sich axial erstreckende Hülse mit einem Stellgewindegang auf, dem ein Stellrad zugeordnet ist, welches ebenfalls eine axiale Hülse mit einem Gewindegang besitzt wobei der Gewindegang des Führungsteils und der Stellgewindegang des Stellrades im zusammengebauten Zustand der Gewürzmühle so ineinandergreifen, dass durch Drehung des ortsfesten Stellrades das Führungsteil in Längsrichtung in der Gewürzmühle verstellbar ist. Hierzu ist der Außenring des Stellrades mit Rasten ausgestattet, die im zusammengebauten Zustand mit radialen Rastnasen eines Kragens des Gehäuseoberteils zusammenwirken, sodass das Stellrad in unterschiedlichen Winkelpositionen im Gehäuseoberteil und damit das Mahlwerk-Innenteil in unterschiedlichen Abständen zum Mahlwerk-Außenteil einstellbar ausgebildet ist.

Das Führungsteil weist einen das montierte Mahlwerk-Innenteil zentrisch durchgreifenden zylindrischen Zapfen auf und das Gehäuseunterteil eine zentrische zylindrische Zapfenaufnahme mit radialen Durchlässen für das Mahlgut, wobei der Zapfen im zusammengesetzten Zustand in der Zapfenaufnahme und das Mahlwerk-Innenteil im Mahlwerk-Außenteil zentriert gelagert ist, der Zapfen allerdings in der Zapfenaufnahme um den möglichen Stellweg des Führungsteiles beweglich bleibt, ohne seine Zentrierung zu verlieren, wodurch die Zentrierfunktion und damit die Mahlgüte des Mahlgutes bei jeder Korngröße weiter gewährleistet bleibt.

Bei einer weiter bevorzugten Ausführungsform des Gegenstandes der Erfindung weist das Mahlwerk-Außenteil einen hülsenförmigen zylindrischen Abschnitt auf, der äußere, sich axial erstreckende Rastnasen oder Raststege besitzt, wobei das Gehäuseunterteil ebenfalls mit einem hülsenförmigen zylindrischen Abschnitt mit axialen Rasten bzw. Aufnahmenuten für die Rastnasen oder Raststege des Mahlwerk-Außenteils ausgestattet ist und der hülsenförmige Abschnitt zwischen den Rasten oder Aufnahmenuten stirnseitig jeweils dachförmig zu den benachbarten Rasten oder Aufnahmenuten abfallend so ausgestaltet ist, dass dadurch Montageschrägen für einen sicheren automatisierten Zusammenbau geschaffen werden und bei einem nicht korrekt zugeführten Mahlwerk-Außenteil dieses entlang der dachförmigen Schrägen selbständig korrekt zwischen den Rasten des Gehäuseunterteils einrastet.

Zur besseren und sichereren Montage des Mahlwerk-Außenteils ist dieses stirnseitig mit einem radialen Montagering ausgestattet, der zueinander parallele Angriffsflächen für einen Fertigungsautomaten aufweist, sodass das an sich zylindrische Mahlwerk-Außenteil vorteilhaft in einer definierten Winkellage von einem Fertigungsautomaten aufgenommen und verbaut werden kann.

Bei dieser vorteilhaften Ausgestaltung der erfindungsgemäßen Gewürzmühle ist das Gehäuseoberteil mit einem zylindrischen Mantelabschnitt versehen und das Gehäuseunterteil mit einem axialen Hülsenabschnitt, wobei beide Abschnitte einen gemeinsamen Gleitsitz bilden und umlaufende Rasten und Rastnasen aufweisen, wobei Gehäuseoberteil und Gehäuseunterteil im gegenseitig elastisch verrasteten Zustand kontinuierlich gegeneinander verdrehbar ausgebildet sind, zum Zusammenbau der Gehäuseober- und unterteile jedoch keine weiteren Schraubenverbindungen, auch nicht zur Fixierung der Bauteile, verwendet werden müssen.

Zwischen dem Stellrad und dem Führungsteil kann vorteilhafterweise ein elastisches Federelement vorgespannt eingesetzt sein, welches gegenseitiges Spiel der Bauteile überbrückt und harte Mahlstöße abfedern kann.

Zum Zusammenbau der Gewürzmühle wird in einem ersten Arbeitsschritt das Mahlwerk-Innenteil auf das Führungsteil aufgeklippst und das Führungsteil mit dem Stellgewindegang seiner axialen Hülse vollständig in den Gewindegang des Stellrades eingeschraubt. In einem weiteren Arbeitsschritt wird das Mahlwerk-Außenteil in das Gehäuseunterteil eingesetzt und das Gehäuseoberteil auf das Gehäuseunterteil aufgeklippst, woraufhin das im ersten Arbeitsschritt zusammengesetzte Funktionsteil mit seinem Stellrad im Kragen des Gehäuseoberteil eingeklippst wird und zwar so, dass die unterschiedlich dicken Flügel in dazu passend breite Seitennuten eingreifen, woraufhin der Aromadeckel aufgesetzt und der Gewürzbehälter mit seinem Gewinde in das Innengewinde des Gehäuseunterteils eingeschraubt wird.

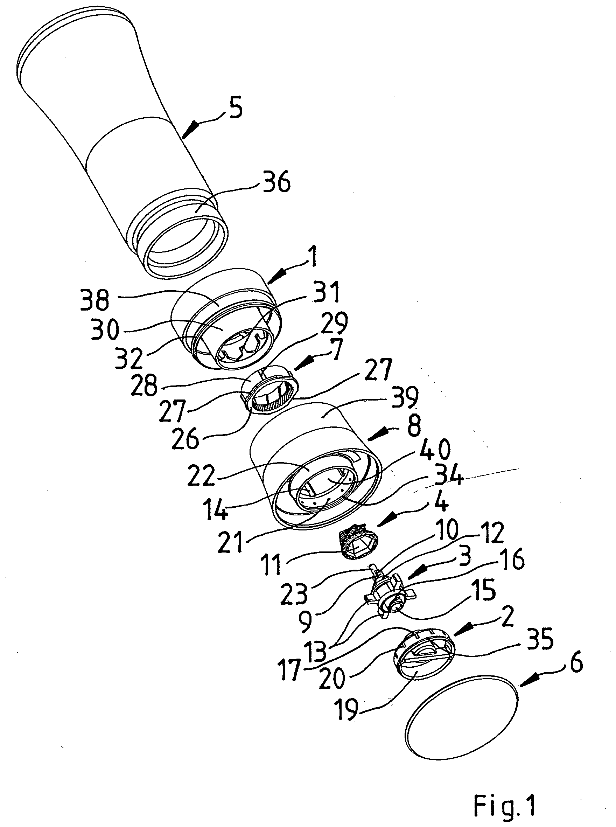

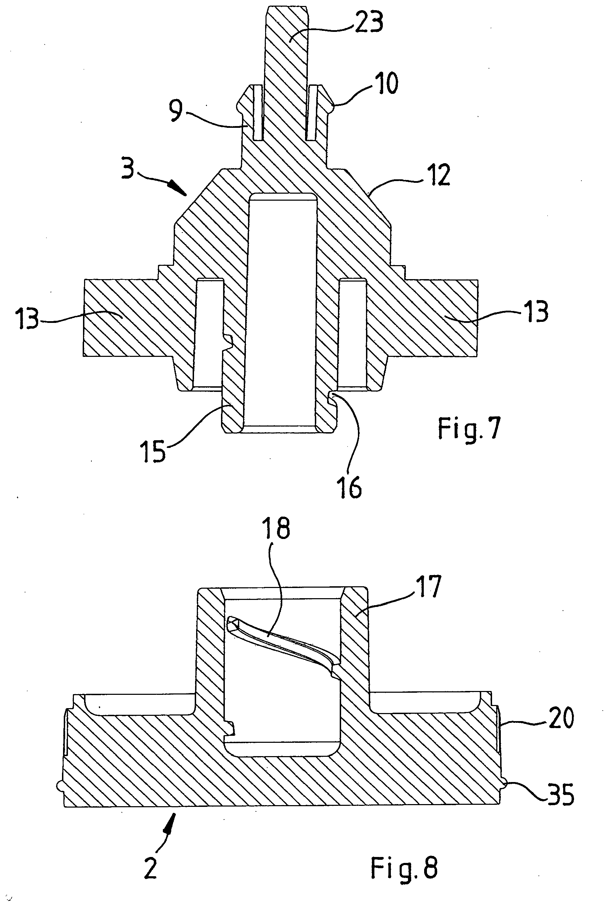

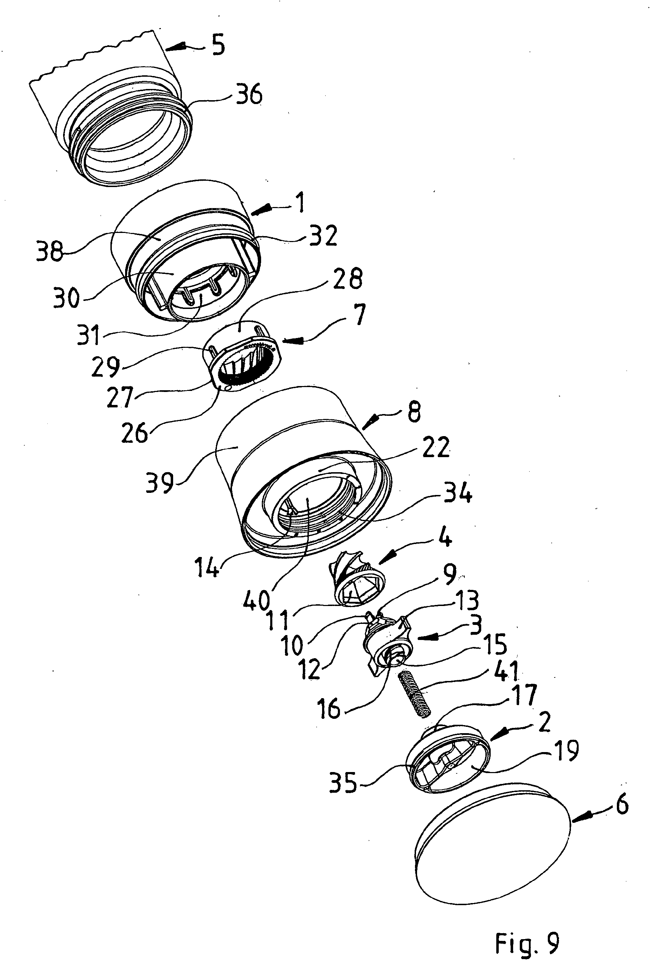

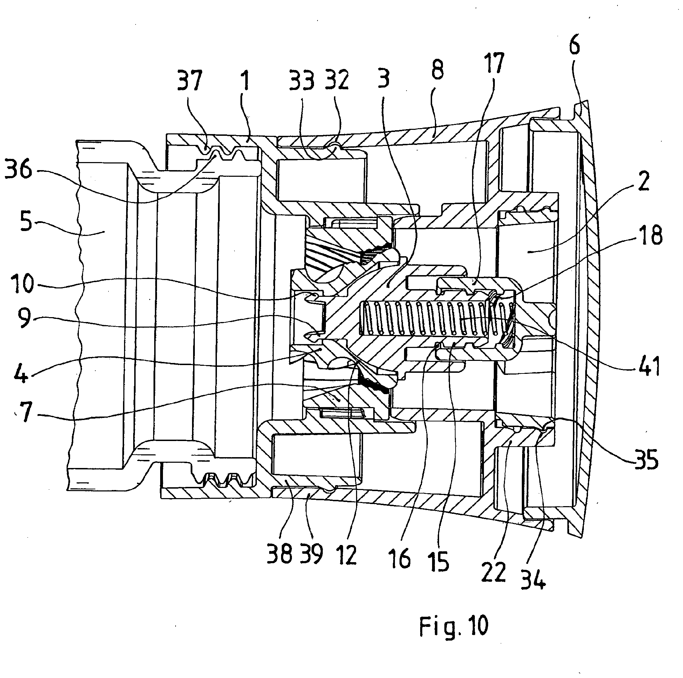

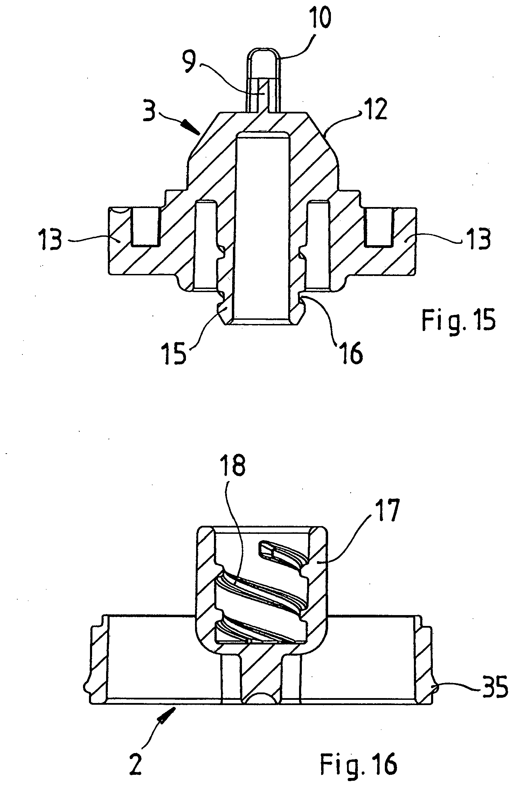

Nachfolgend ist ein Ausführungsbeispiel der Erfindung anhand von Zeichnungen näher beschrieben. Es zeigen:
- Fig. 1: eine räumliche Explosionszeichnung einer 1. Version der Gewindemühle,
- Fig. 2: eine geschnittene Seitenansicht der Gewindemühle gemäß Fig. 1 ohne dazugehörigen Gewürzbehälter,
- Fig. 3: eine Ansicht von unten auf das Gehäuseunterteil,
- Fig. 4: eine geschnittene Seitenansicht des Gehäuseunterteils gemäß Fig. 3,
- Fig. 5: eine Ansicht von unten auf das Gehäuseoberteil,
- Fig. 6: eine geschnittene Seitenansicht des Gehäuseoberteils gemäß Fig. 5,
- Fig. 7: eine geschnittene Seitenansicht durch das Führungsteil, und
- Fig. 8: eine geschnittene Seitenansicht durch das Stellrad der Gewürzmühle.
- Fig. 9: eine Explosionszeichnung einer 2. Version der Gewürzmühle,
- Fig. 10: eine geschnittene Seitenansicht der Gewürzmühle gemäß Fig. 8,
- Fig. 11: eine Ansicht von unten auf das Gehäuseunterteil der 2. Version,
- Fig. 12: eine geschnittene Seitenansicht des Gehäuseunterteils gemäß Fig. 11,
- Fig. 13: eine Ansicht von unten auf das Gehäuseoberteil der 2. Version,
- Fig. 14: eine geschnittene Seitenansicht des Gehäuseoberteils gemäß Fig. 13,
- Fig. 15: eine geschnittene Seitenansicht durch das Führungsteil der 2. Version der Gewürzmühle, und
- Fig. 16: eine geschnittene Seitenansicht durch das Stellrad der 2. Version der Gewürzmühle.
Die Gewürzmühle besteht in beiden Versionen der gezeigten Ausführungsformen jeweils im Wesentlichen, wie aus den Figuren 1 und 9 ersichtlich, aus einem Gehäuseunterteil 1, einem Gehäuseoberteil 8 sowie einem Mahlwerk-Außenteil 7 und einem Mahlwerk-Innenteil 4 eines Kegelmahlwerkes, aus einem Gewürzbehälter 5 und einem Aromadeckel 6, wobei der Übersichtlichkeit halber in den Figuren 1 - 8 der 1. Version und den Figuren 9 - 16 der 2. Version jeweils funktionsgleiche Bauteile mit den gleichen Bezugszeichen versehen sind.

Der Gewürzbehälter 5 besteht bevorzugt aus Kunststoff und weist ein Außengewinde 36 auf, mit dem er in einem Innengewinde 37 des Gehäuseunterteils 1 verschraubt ist.

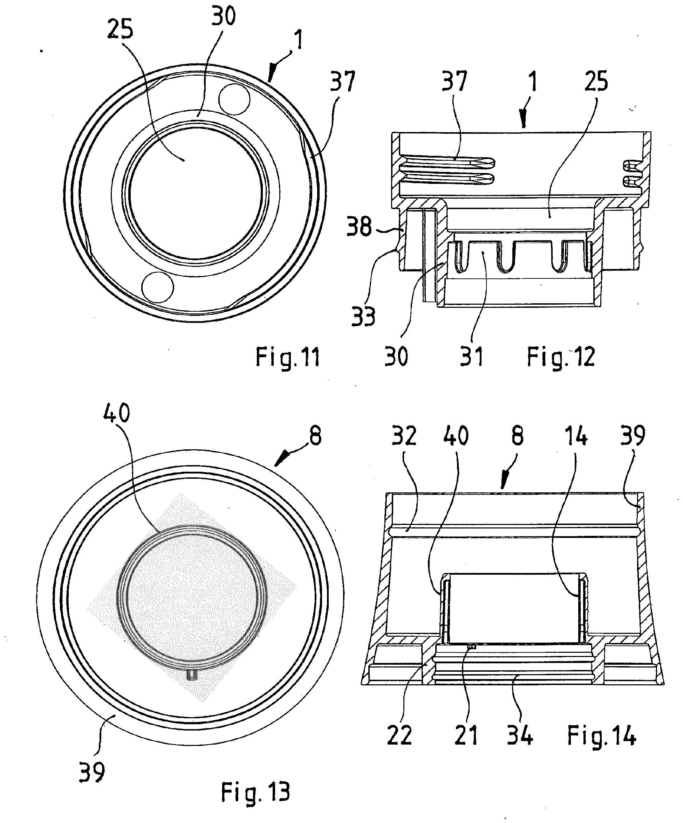

Das Mahlwerk-Außenteil 7 wird zwischen Gehäuseunterteil 1 und Gehäuseoberteil 8 eingeklemmt gehalten, wobei das Gehäuseoberteil 8, wie in den Figuren 3 und 4, bzw. in den Figuren 11 und 12, dargestellt, in einem zylindrischen Mantelabschnitt 39 und das Gehäuseunterteil 1, wie in den Figuren 5 und 6, bzw. in den Figuren 13 und 14 gezeigt, in einem axialen Hülsenabschnitt 38 umlaufende Rasten 32 und Rastnasen 33 aufweisen, die einen gemeinsamen Gleitsitz bilden, um die das Gehäuseoberteil 8 und das Gehäuseunterteil 1 im verrasteten Zustand gegenseitig kontinuierlich gegeneinander verdrehbar sind.

Das Mahlwerk-Außenteil 7 besitzt einen hülsenförmigen zylindrischen Abschnitt 28, der äußere, sich axial erstreckende Rastnasen 29 bzw. Raststege besitzt, die in axiale Rasten 31 bzw. Aufnahmenuten des Gehäuseunterteils 1 eingreifen, die solche im hülsenförmigen zylindrischen Abschnitt 30 aufweist, wobei zwischen den Rasten 31 bzw. Aufnahmenuten des hülsenförmigen Abschnittes 30 stirnseitig jeweils dachförmig zu den benachbarten Rasten 31 bzw. Aufnahmenuten abfallend ausgebildete Montageschrägen für einen sicheren automatisierten Zusammenbau geschaffen sind.

Das Gehäuseoberteil 8 weist auf der dem Mahlwerk-Außenteil 7 entgegengesetzten Seite einen inneren Kragen 22 auf, der sich nach innen erstreckende Rastnasen 21 aufweist, die in Rasten 20 des Außenringes 19 des Stellrades 2 eingreifen können, über dass der Mahlgrad bzw. die Körnung des Mahlgutes vorherbestimmt werden kann, wozu die Gewürzmühle mit einem Führungsteil 3 ausgestattet ist, welches innerhalb der Gewürzmühle durch einen in einer axialen Hülse 17 des Stellrades 2 angeordneten Gewindegang und einen komplementären Stellgewindegang 16 des Führungsteiles 3 an einer axialen Hülse 15 erzeugbar ist, wobei das Führungsteil 3 vier, bzw. 2, sich radial erstreckende Flügel 13 aufweist, die in Nuten 14 im Innenzylinder 40 des Gehäuseoberteils 8 ein Verdrehen des Führungsteils 3 verhindern und dieses darin axial führen. Die Flügel 13 der 1. Version sind dabei unterschiedlich dick, ebenso wie die dazugehörigen Nuten 14 unterschiedlich breit ausgeführt sind, sodass eine Fehlmontage des Führungsteils 3 in dem Gehäuseoberteil 8 unmöglich ist.

Am äußeren Rand des Stellrades 2 sind äußere Rastnasen 35 bzw. eine Umfangsraste vorgesehen, die in Rasten 34 bzw. eine Umfangsnut im zylindrischen Mantelabschnitt 39 des Gehäuseoberteils 8 eingreifen und so das Stellrad 2 ortsfest aber winkelverstellbar im Gehäuseoberteil 8 verriegeln.

Das Führungsteil 3, auf dem das Mahlwerk-Innenteil 4 aufgesetzt ist, weist sich durch das Mahlwerk-Innenteil 4 erstreckende Rastlaschen 9 auf, sowie Rasten 10, mit denen das Mahlwerk-Innenteil 4 formschlüssig auf dem Führungsteil 3 verriegelt ist. Das Mahlwerk-Innenteil 4 seinerseits weist eine mehrflächige trichterförmige Innenkontur 11 auf, ebenso wie das Führungsteil 3 eine komplementäre, mehrflächige, pyramidenförmige Außenkontur 12 besitzt, wodurch zum einen das Mahlwerk-Innenteil 4 zentriert auf dem Führungsteil 3 gelagert ist und weiterhin eine große Drehmomentübertragungsfläche zur Verfügung gestellt wird, um die eingeleitete Drehbewegung eines gegenseitigen Verdrehens von Gehäuseunterteil 1 und Gehäuseoberteil 8 sicher und dauerhaft zu übertragen.

Das Führungsteil 3 der 1. Version weist zudem einen ein montiertes Mahlwerk-Innenteil 4 zentrisch durchgreifenden zylindrischen Zapfen 23 und das Gehäuseunterteil 1 eine zentrische Zapfenaufnahme 24 mit radialen Durchlässen 25 für das Mahlgut auf, wobei der Zapfen 23 im zusammengebauten Zustand in der Zapfenaufnahme 25 und das Mahlwerk-Innenteil 4 im Mahlwerk-Außenteil 7 zentriert gelagert ist. Das Mahlwerk-Außenteil 7 besitzt einen radialen Montagering 26 mit zueinander parallelen Angriffsflächen 27 für einen Fertigungsautomaten.

Das Mahlwerk-Außenteil 7 weist einen hülsenförmigen zylindrischen Abschnitt 28 weist, der äußere, sich axial erstreckende Rastnasen 29 oder Raststege besitzt und das Gehäuseunterteil 1 weist einen hülsenförmigen zylindrischen Abschnitt 30 mit axialen Rasten 31 bzw. Aufnahmenuten für die Rastnasen 29 oder Raststege des Mahlwerk-Außenteils 7 auf, wobei der hülsenförmige Abschnitt 30 zwischen den Rasten 31 oder Aufnahmenuten stirnseitig jeweils dachförmig zu den benachbarten Rasten 31 oder Aufnahmenuten abfallend ausgebildet ist, wodurch Montageschrägen für einen sicheren automatisierten Zusammenbau geschaffen sind.

Das Gehäuseoberteil 8 bildet in einem zylindrischen Mantelabschnitt 39 mit dem Gehäuseunterteil 1 um einen axialen Hülsenabschnitt 38 herum einen gemeinsam Gleitsitz, wobei diese umlaufende Rasten 32 und Rastnasen 33 aufweisen, sodass das Gehäuseoberteil 8 und das Gehäuseunterteil 1 im gegenseitig verrasteten Zustand kontinuierlich gegeneinander verdrehbar ausgebildet sind.

Das Stellrad 2 und der Kragen 22 des Gehäuseoberteils 8 weisen des Weiteren gegenseitige umlaufende Rasten 34 und Rastnasen 35 auf, wodurch das Stellrad 2 im gegenseitig verrasteten Zustand im Abstand der Rasten 20 des Außenrings 19 und der Rastnasen 21 des Kragens 22 in festgelegten Drehwinkelabständen verdrehbar ausgebildet sind.

Zwischen dem Stellrad 2 und dem Führungsteil 3 der 2. Version ist ein elastisches Federelement 41 vorgespannt eingesetzt, welches gegenseitiges Spiel und Klappergeräusche der Bauteil verhindert, ebenso wie es Kraftspitzen beim Mahlprozess abfedern kann.

Der Aromadeckel 6 dient zum Abdichten einer nicht genutzten und quasi verkehrt herum auf der Unterseite des Gewürzbehälters 5 abgestellten Gewürzmühle, wobei der Aromadeckel 6 frei auf dem oberen Gehäuseoberteil 8 aufliegt oder auch darauf verrastet werden kann.

Alle Bauteile der Gewürzmühle bestehen aus gesundheitsunbedenklichen Kunststoffen, wie beispielsweise aus PP oder aus Keramikbauteilen, wobei alle Bauteile werkzeugfrei und frei von zusätzlichen Verbindungsmitteln zusammenbaubar ausgeführt sind, wozu sie mit gegenseitigen elastisch einrastenden Rasten 10;20;31;32;34 und entsprechenden Rastnasen 21;29;33;35 ausgestattet sind.

## Patentansprüche

1. Gewürzmühle aus einem Gewürzbehälter (5) für das Mahlgut, einem Gehäuseunterteil (1) mit einem verdrehfesten Mahlwerk-Außenteil (7) eines Kegelmahlwerks, einem Gehäuseoberteil (8) mit einem verdrehfesten Mahlwerk-Innenteil (4) und gegeneinander verdrehbarem Gehäuseober- und -unterteil (8;1) sowie aus einem Aromadeckel (6), wobei alle Bauteile aus gesundheitsunbedenklichen Kunststoffen oder Keramik bestehen und alle Bauteile werkzeugfrei und frei von zusätzlichen Verbindungsmitteln zusammenbaubar sind und dazu mit gegenseitigen Rasten (10;20;31;32;34) und Rastnasen (21;29;33;35) ausgestattet sind, **dadurch gekennzeichnet, dass** das Mahlwerk-Innenteil (4) auf einem Führungsteil (3) aufgesetzt ist, welches sich durch das Mahlwerk-Innenteil (4) erstreckende Rastlaschen (9) mit daran angeordneten Rasten (10) aufweist, welche das Mahlwerk-Innenteil (4) formschlüssig auf dem Führungsteil (3) verriegelt halten und dass das Führungsteil (3) sich radial erstreckende Flügel (13) aufweist, deren Enden in axialen Nuten (14) im Gehäuseoberteil (8) eingreifen, die länger ausgebildet sind, als die Flügel (13) breit sind und dass das Führungsteil (3) entlang der Mittellängsachse der Gewürzmühle längsverschieblich darin geführt ist.

2. Gewürzmühle nach Anspruch 1, **dadurch gekennzeichnet, dass** das Mahlwerk-Innenteil (4) eine mehrflächige trichterförmige Innenkontur (11) und das Führungsteil (3) eine komplementäre, mehrflächige pyramidenförmige Außenkontur (12) aufweist und dass das Mahlwerk-Innenteil (4) auf dem Führungsteil (3) zentriert gelagert ist und die Innen- und Außenkonturen (11;12) gegenseitige formschlüssige Drehmomentübertragungsflächen bilden.

3. Gewürzmühle nach Anspruch 1, **dadurch gekennzeichnet, dass** die Flügel (13) und die Nuten (14) unterschiedlich dick bzw. breit ausgebildet sind und dass das Führungsteil (3) nur in einer vorherbestimmten Position in das Gehäuseoberteil (8) einsetzbar ausgebildet ist.

4. Gewürzmühle nach Anspruch 1, **dadurch gekennzeichnet, dass** das Führungsteil (3) auf der dem Mahlwerk-Innenteil (4) entgegengesetzten Seite eine axiale Hülse (15) mit einem Stellgewindegang (16) aufweist und dem Führungsteil (3) ein Stellrad (2) zugeordnet ist, welches mit einer axialen Hülse (17) und einem Gewindegang (18) ausgestattet ist, und dass der Stellgewindegang (16) der axialen Hülse (15) und der Gewindegang (18) der axialen Hülse (17) im zusammengebauten Zustand ineinandergreifen, sowie mit einem Außenring (19) mit Rasten (20), in die im zusammengebauten Zustand Rastnasen (21) eines radialen Kragens (22) des Gehäuseoberteils (8) eingreifen und dass das Stellrad (2) in unterschiedlichen Winkelpositionen im Gehäuseoberteil (8) und damit das Mahlwerk-Innenteil (4) in unterschiedlichen Abständen zum Mahlwerk-Außenteil (7) einstellbar ist.

5. Gewürzmühle nach Anspruch 1, **dadurch gekennzeichnet, dass** das Führungsteil (3) einen ein montiertes Mahlwerk-Innenteil (4) zentrisch durchgreifenden zylindrischen Zapfen (23) und das Gehäuseunterteil (1) eine zentrische Zapfenaufnahme (24) mit radialen Durchlässen (25) für das Mahlgut aufweist und der Zapfen (23) im zusammengebauten Zustand in der Zapfenaufnahme (25) und das Mahlwerk-Innenteil (4) im Mahlwerk-Außenteil (7) zentriert gelagert ist.

6. Gewürzmühle nach einem der vorgenannten Ansprüche, **dadurch gekennzeichnet, dass** das Mahlwerk-Außenteil (7) einen radialen Montagering (26) mit zueinander parallelen Angriffsflächen (27) für einen Fertigungsautomaten aufweist.

7. Gewürzmühle nach einem der vorgenannten Ansprüche, **dadurch gekennzeichnet, dass** das Mahlwerk-Außenteil (7) einen hülsenförmigen zylindrischen Abschnitt (28) aufweist, der äußere, sich axial erstreckende Rastnasen (29) oder Raststege besitzt und dass das Gehäuseunterteil (1) einen hülsenförmigen zylindrischen Abschnitt (30) mit axialen Rasten (31) bzw. Aufnahmenuten für die Rastnasen (29) oder Raststege des Mahlwerk-Außenteils (7) aufweist und dass der hülsenförmige Abschnitt (30) zwischen den Rasten (31) oder Aufnahmenuten stirnseitig jeweils dachförmig zu den benachbarten Rasten (31) oder Aufnahmenuten abfallend ausgebildet ist und dadurch Montageschrägen für einen sicheren automatisierten Zusammenbau geschaffen sind.

8. Gewürzmühle nach einem der vorgenannten Ansprüche, **dadurch gekennzeichnet, dass** das Gehäuseoberteil (8) in einem zylindrischen Mantelabschnitt (39) und das Gehäuseunterteil (1) um einen axialen Hülsenabschnitt (38), die gemeinsam einen Gleitsitz bilden, umlaufende Rasten (32) und Rastnasen (33) aufweisen und Gehäuseoberteil (8) und Gehäuseunterteil (1) im gegenseitig verrasteten Zustand kontinuierlich gegeneinander verdrehbar ausgebildet sind.

9. Gewürzmühle nach einem der vorgenannten Ansprüche, **dadurch gekennzeichnet, dass** das Stellrad (2) und der Kragen (22) des Gehäuseoberteils (8) gegenseitige umlaufende Rasten (34) und Rastnasen (35) aufweisen und dass das Stellrad (2) im gegenseitig verrasteten Zustand im Abstand der Rasten (20) des Außenrings (19) und der Rastnasen (21) des Kragens (22) in festgelegten Drehwinkelabständen verdrehbar ausgebildet sind.

10. Gewürzmühle nach einem der vorgenannten Ansprüche, **dadurch gekennzeichnet, dass** zwischen Stellrad (2) und Führungsteil (3) ein elastisches Federelement (41) vorgespannt eingesetzt ist.

11. Arbeitsverfahren für den Zusammenbau einer Gewürzmühle nach einem der vorgenannten Ansprüche, **dadurch gekennzeichnet, dass** in einem ersten Arbeitsschritt das Mahlwerk-Innenteil (4) auf das Führungsteil (3) aufgeklippst und das Führungsteil (3) mit seinem Stellgewindegang (16) vollständig in den Gewindegang (18) des Stellrades (2) eingeschraubt wird, in einem weiteren Arbeitsschritt das Mahlwerk-Außenteil (7) in das Gehäuseunterteil (1) eingesetzt und das Gehäuseoberteil (8) auf das Gehäuseunterteil (1) aufgeklippst wird, woraufhin das im ersten Arbeitsschritt zusammengesetzte Funktionsteil mit seinem Stellrad (2) im Kragen (22) des Gehäuseoberteils (8) eingeklippst wird und zwar so, dass die unterschiedlich dicken Flügel (13) in dazu passend breite Seitennuten (14) eingreifen, woraufhin der Aromadeckel (6) aufgesetzt und der Gewürzbehälter (5) mit seinem Gewinde (36) in das Innengewinde (37) des Gehäuseunterteils (1) eingeschraubt wird.

## Claims

1. Spice mill made up of a spice container (5) for the grinding material, of a lower housing part (1) with a rotationally fixed outer part (7) of a conical grinder, of an upper housing part (8) with a rotationally fixed inner grinder part (4), and the upper and lower housing parts (8; 1) being rotatable in relation to one another, and of an aroma-protection cover (6), wherein all the components consist of food-grade plastics or ceramic material and all the components can be assembled without the use of tools or other additional connecting means and, for this purpose, are equipped with mating catches (10;20;31;32;34) and latching noses (21;29;33;35), **characterized in that** the inner grinder part (4) is positioned on a guide part (3), which has latching lugs (9) which extend through the inner grinder part (4) and have catches (10) arranged thereon, the catches locking the inner grinder part (4) in a form-fitting manner on the guide part (3), and **in that** the guide part (3) has radially extending wings (13), of which the ends engage in axial grooves (14) in the upper housing part (8), the length of the grooves being greater than the width of the wings (13), and **in that** the guide part (3) is guided in the spice mill such that it can be displaced longitudinally along the centre longitudinal axis thereof.

2. Spice mill according to Claim 1, **characterized in that** the inner grinder part (4) has a polygonal, hopper-shaped inner contour (11) and the guide part (3) has a complementary, polygonal, pyramid-shaped outer contour (12), and **in that** the inner grinder part (4) is mounted in a centred manner on the guide part (3) and the inner and outer contours (11; 12) form mating form-fitting torque-transmission surfaces.

3. Spice mill according to Claim 1, **characterized in that** the wings (13) and the grooves (14) are of different thicknesses and/or widths, and **in that** the guide part (3) is designed such that it can be inserted into the upper housing part (8) only in a predetermined position.

4. Spice mill according to Claim 1, **characterized in that**, on the side opposite the inner grinder part (4), the guide part (3) has an axial sleeve (15) with an adjusting thread turn (16), and the guide part (3) is assigned an adjusting wheel (2), which is equipped with an axial sleeve (17) and with a thread turn (18), and **in that** the adjusting thread turn (16) of the axial sleeve (15) and the thread turn (18) of the axial sleeve (17) interengage in the assembled state, and with an outer ring (19) with catches (20), in which latching noses (21) of a radial collar (22) of the upper housing part (8) engage in the assembled state, and **in that** the adjusting wheel (2) can be set to different angular positions in the upper housing part (8) and thus the inner grinder part (4) can be set at different distances from the outer grinder part (7).

5. Spice mill according to Claim 1, **characterized in that** the guide part (3) has a cylindrical pin (23), which engages through the centre of an inner grinder part (4) in the installed state, and the lower housing part (1) has a central pin holder (24) with radial through-passages (25) for the grinding material, and the pin (23) is mounted in a centred manner in the pin holder (25), as is the inner grinder part (4) in the outer grinder part (7), in the assembled state.

6. Spice mill according to one of the preceding claims, **characterized in that** the outer grinder part (7) has a radial installation ring (26) with mutually parallel engagement surfaces (27) for a production machine.

7. Spice mill according to one of the preceding claims, **characterized in that** the outer grinder part (7) has a sleeve-like, cylindrical portion (28), which has outer, axially extending latching noses (29) or latching crosspieces, and **in that** the lower housing part (1) has a sleeve-like, cylindrical portion (30) with axial catches (31) or accommodating grooves for the latching noses (29) or latching crosspieces of the outer grinder part (7), and **in that**, between the catches (31) or accommodating grooves, the sleeve-like portion (30) is designed to slope down on the end side, in the form of a roof in each case, in relation to the adjacent catches (31) or accommodating grooves, and this creates installation slopes for reliable automated assembly.

8. Spice mill according to one of the preceding claims, **characterized in that** the upper housing part (8) has encircling catches (32) in a cylindrical lateral-surface portion (39) and the lower housing part (1) has encircling latching noses (33) around an axial sleeve portion (38), said cylindrical lateral-surface portion and axial sleeve portion together forming a sliding fit, and the upper housing part (8) and lower housing part (1) are designed such that they can be rotated continuously in relation to one another in the latched state.

9. Spice mill according to one of the preceding claims, **characterized in that** the adjusting wheel (2) and the collar (22) of the upper housing part (8) have mating, encircling catches (34) and latching noses (35), and **in that** the adjusting wheel (2) are designed such that it can be rotated by defined angle-of-rotation distances, equal to the distance between the catches (20) of the outer ring (19) and the latching noses (21) of the collar (22), in the latched state.

10. Spice mill according to one of the preceding claims, **characterized in that** an elastic spring element (41) is inserted in a pre-stressed state between the adjusting wheel (2) and guide part (3).

11. Operating method for the assembly of a spice mill according to one of the preceding claims, **characterized in that**, in a first operating step, the inner grinder part (4) is clipped onto the guide part (3) and the guide part (3) is screwed, by way of its adjusting thread turn (16), all the way into the thread turn (18) of the adjusting wheel (2); in a further operating step, the outer grinder part (7) is inserted into the lower housing part (1) and the upper housing part (8) is clipped onto the lower housing part (1); whereupon, the functional part put together in the first operating step is clip-fitted, by way of its adjusting wheel (2), in the collar (22) of the upper housing part (8), to be precise such that the wings (13) of different thicknesses engage in matching-width side grooves (14); whereupon, the aroma-protection cover (6) is placed in position and the spice container(5) is screwed, by way of its thread (36), into the internal thread (37) of the lower housing part (1).

## Revendications

1. Moulin à épices composé d'un réservoir d'épices (5) pour le produit à moudre, d'une partie inférieure de boîtier (1) avec une pièce extérieure de broyeur calée en rotation (7) d'un broyeur conique, une partie supérieure de boîtier (8) avec une partie intérieure de broyeur calée en rotation (4) et des parties supérieure et inférieure de boîtier (8; 1) pouvant tourner l'une par rapport à l'autre, ainsi que d'un couvercle à arômes (6), dans lequel toutes les pièces sont constituées de matière plastique ou de céramique inoffensive pour la santé et toutes les pièces peuvent être assemblées sans outil et sans autres moyens d'assemblage et sont dotées à cet effet de crans d'encliquetage (10; 20; 31; 32; 34) et d'ergots d'encliquetage (21; 29; 33; 35) mutuels, **caractérisé en ce que** la partie intérieure de broyeur (4) est posée sur une pièce de guidage (3), qui présente des pattes d'encliquetage (9) s'étendant à travers la partie intérieure de broyeur (4) avec des crans (10) disposés sur celles-ci, qui maintiennent la partie intérieure de broyeur (4) verrouillée par emboîtement sur la pièce de guidage (3), et **en ce que** la pièce de guidage (3) présente des ailes s'étendant radialement (13), dont les extrémités s'engagent dans des rainures axiales (14) dans la partie supérieure de boîtier (8), qui sont plus longues que les ailes (13) sont larges et **en ce que** la pièce de guidage (3) est guidée dans le moulin à épices de façon déplaçable longitudinalement le long de l'axe central longitudinal de celui-ci.

2. Moulin à épices selon la revendication 1, **caractérisé en ce que** la partie intérieure de broyeur (4) présente un contour intérieur en forme d'entonnoir à plusieurs faces (11) et la pièce de guidage (3) présente un contour extérieur en forme de pyramide à plusieurs faces complémentaire (12) et **en ce que** la partie intérieure de broyeur (4) est montée de façon centrée sur la pièce de guidage (3) et les contours intérieur et extérieur (11; 12) forment des faces de transmission de couple de rotation mutuelles emboîtées.

3. Moulin à épices selon la revendication 1, **caractérisé en ce que** les ailes (13) et les rainures (14) sont réalisées avec une épaisseur ou une largeur différente et **en ce que** la pièce de guidage (3) n'est réalisée de façon insérable dans la partie supérieure de boîtier (8) que dans une position prédéterminée.

4. Moulin à épices selon la revendication 1, **caractérisé en ce que** la pièce de guidage (3) présente sur le côté opposé à la partie intérieure de broyeur (4) une douille axiale (15) avec un pas de vis de réglage (16) et à la pièce de guidage (3) est associée une roue de réglage (2), qui est munie d'une douille axiale (17) et d'un pas de vis (18), et **en ce que** le pas de vis de réglage (16) de la douille axiale (15) et le pas de vis (18) de la douille axiale (17) engrènent l'un dans l'autre dans l'état assemblé, ainsi qu'avec une bague extérieure (19) avec des crans (20), dans lesquels dans l'état assemblé des ergots d'encliquetage (21) d'une couronne radiale (22) de la partie supérieure de boîtier (8) s'engagent et **en ce que** la roue de réglage (2) est réglable dans différentes positions angulaires dans la partie supérieure de boîtier (8) et dès lors la partie intérieure de broyeur (4) est réglable à différentes distances de la partie extérieure de broyeur (7).

5. Moulin à épices selon la revendication 1, **caractérisé en ce que** la pièce de guidage (3) présente un tourillon cylindrique (23) traversant au centre une partie intérieure de broyeur montée (4) et la partie inférieure de boîtier (1) présente un logement de tourillon central (24) avec des passages radiaux (25) pour le produit à moudre et le tourillon (23) dans l'état assemblé est monté de façon centrée dans le logement de tourillon (25) et la partie intérieure de broyeur (4) est montée de façon centrée dans la partie extérieure de broyeur (7).

6. Moulin à épices selon l'une quelconque des revendications précédentes, **caractérisé en ce que** la partie extérieure de broyeur (7) présente une bague de montage radiale (26) avec des faces de prise parallèles l'une à l'autre (27) pour un automate de fabrication.

7. Moulin à épices selon l'une quelconque des revendications précédentes, **caractérisé en ce que** la partie extérieure de broyeur (7) présente une partie cylindrique en forme de douille (28), qui comporte des ergots d'encliquetage extérieurs (29) ou des nervures d'encliquetage qui s'étendent axialement et **en ce que** la partie inférieure de boîtier (1) présente une partie cylindrique en forme de douille (30) avec des crans axiaux (31) ou des rainures de logement pour les ergots d'encliquetage (29) ou les nervures d'encliquetage de la partie extérieure de broyeur (7) et **en ce que** la partie en forme de douille (30) entre les crans (31) ou les rainures de logement est configurée frontalement chaque fois en forme de toit descendant vers les crans voisins (31) ou les rainures de logement voisines et de ce fait des rampes de montage sont formées pour réaliser un assemblage automatisé offrant toute sécurité.

8. Moulin à épices selon l'une quelconque des revendications précédentes, **caractérisé en ce que** la partie supérieure de boîtier (8) présente dans une partie latérale cylindrique (39) et la partie inférieure de boîtier (1) présente autour d'une partie de douille axiale (38), qui forment ensemble un siège glissant, des crans (32) et des ergots d'encliquetage (33) périphériques et la partie supérieure de boîtier (8) et la partie inférieure de boîtier (1) sont réalisées de façon rotative en continu l'une par rapport à l'autre dans l'état mutuellement encliqueté.

9. Moulin à épices selon l'une quelconque des revendications précédentes, **caractérisé en ce que** la roue de réglage (2) et la couronne (22) de la partie supérieure de boîtier (8) présentent des crans (34) et des ergots d'encliquetage (35) périphériques mutuels et **en ce que** la roue de réglage (2) sont réalisées de façon rotative dans l'état mutuellement encliqueté à distance des crans (20) de la bague extérieure (19) et des ergots d'encliquetage (21) de la couronne (22) à des distances angulaires fixées.

10. Moulin à épices selon l'une quelconque des revendications précédentes, **caractérisé en ce qu'**un élément de ressort élastique (41) est introduit sous forme précontrainte entre la roue de réglage (2) et la pièce de guidage (3).

11. Méthode de travail pour l'assemblage d'un moulin à épices selon l'une quelconque des revendications précédentes, **caractérisée en ce que** dans une première étape de travail on encliquète la partie intérieure de broyeur (4) sur la pièce de guidage (3) et on visse la pièce de guidage (3) avec son pas de vis de réglage (16) entièrement dans le pas de vis (18) de la roue de réglage (2), dans une autre étape de travail on introduit la partie extérieure de broyeur (7) dans la partie inférieure de boîtier (1) et on encliquète la partie supérieure de boîtier (8) sur la partie inférieure de boîtier (1), puis on encliquète la partie fonctionnelle assemblée dans la première étape de travail avec sa roue de réglage (2) dans la couronne (22) de la partie supérieure de boîtier (8), et notamment **en ce que** les ailes d'épaisseur différente (13) s'engagent dans des rainures latérales (14) de largeur adaptée à celles-ci, puis on pose le couvercle à arômes (6) et on visse le réservoir d'épices (5) avec son filetage (36) dans le filetage intérieur (37) de la partie inférieure de boîtier (1).
